# EUROPÄISCHE PATENTSCHRIFT

(11) **EP 1 805 065 B1**
(45) Veröffentlichungstag und Bekanntmachung des Hinweises auf die Patenterteilung: **18.05.2011**
(21) Anmeldenummer: 05779148.5
(22) Anmeldetag: 03.08.2005
(51) Int. Cl.: B60R 21/01

(54) **SENSOR, AUSGEBILDET ZUR ANORDNUNG IN EINER REIHENSCHALTUNG, INSBESONDERE ZUR ANWENDUNG IN EINEM KRAFTFAHRZEUG, EIN VERFAHREN ZUM BETREIBEN SOLCHER SENSOREN UND EINE VORRICHTUNG DAZU**
SENSOR FOR ARRANGEMENT IN A SERIES CIRCUIT, IN PARTICULAR FOR USE IN A MOTOR VEHICLE, PROCESS AND DEVICE FOR OPERATING SUCH SENSORS
DETECTEUR PREVU POUR ETRE MONTE EN COUPLAGE EN SERIE, NOTAMMENT POUR ETRE UTILISE DANS UNE AUTOMOBILE, PROCEDE D'EXPLOITATION DE TELS DETECTEURS ET DISPOSITIF APPROPRIE

(30) Priorität: 21.10.2004 DE 102004051275
(43) Veröffentlichungstag der Anmeldung: 11.07.2007
(73) Patentinhaber: ROBERT BOSCH GMBH, 70442 Stuttgart (DE)
(72) Erfinder: WELLHOEFER, Matthias, 71701 Schwieberdingen (DE); FRESE, Volker, 71701 Schwieberdingen (DE)
(86) Internationale Anmeldenummer: PCT/EP2005/053805
(87) Internationale Veröffentlichungsnummer: WO 2006/045648

(56) Entgegenhaltungen:
- DE-A1- 10 114 504
- US-B1- 6 288 636
- US-B1- 6 295 494

## Beschreibung

### STAND DER TECHNIK

Die vorliegende Erfindung betrifft einen Sensor, ausgebildet zur Anordnung in einer Reihenschaltung, insbesondere zur Anwendung in einem Kraftfahrzeug, ein Verfahren zum Betreiben solcher Sensoren und eine Vorrichtung dazu.

Bei Kraftfahrzeugen werden bereits seit Jahren unterschiedliche Sensoren zur Detektion von Aufprallereignissen eingesetzt. Drucksensoren und Beschleunigungssensoren zur Erkennung von Seitenaufprallen außerhalb des dazugehörigen elektronischen Steuergeräts von so genannten Rückhaltesystemen kommen als so genannte periphere Sensoren zur Anwendung. Als weitere periphere Sensoren werden Beschleunigungssensoren zur Erkennung der Aufprall- beziehungsweise Crashschwere und zur so genannten Offseterkennung benutzt. Oftmals werden mehrere gleichartige Sensoren an verschiedenen Stellen zum selben Zweck im Kraftfahrzeug installiert, wie beispielsweise so genannte PAS-Sensoren in den so genannten A-, B- und C-Säulen eines Kraftfahrzeugaufbaus oder Drucksensoren in den Vorder- und Hintertüren des Fahrzeugs zur Seitencrasherkennung. Diese Sensoren werden an das zugehörige Steuergerät in bekannter Weise zur Übertragung von Energie und Daten angeschlossen, zum Beispiel mittels Bussystemen zum Anschluss mehrerer Sensoren an einer Schnittstelle.

Zur Illustration sei DE 101 14 504 A1 genannt, die ein Verfahren zur Übertragung von Daten zwischen einem Sensor und einem Steuergerät beschreibt, welche beide über eine Zweidrahtleitung miteinander verbunden sind. Über diese Zweidrahtleitung werden sowohl Energie für den Sensor als auch Daten des Sensors übertragen. Hierbei beinhalten diese Daten auch sensorspezifische Informationen wie Angaben über seine Identifikation, Status und sensierte Werte.

Derzeitige Systeme sind in ihrem Aufbau und ihrer Architektur typischerweise relativ unflexibel. Üblicherweise wird ein Rückhaltesystem für ein Fahrzeug ausgelegt und kann nur in einem begrenzten Maß verändert oder erweitert werden. Auch ein Bussystem muss normalerweise eine geeignete Konfiguration aufweisen. So werden beispielsweise in Airbagsystemen immer mehr periphere Sensoren verwendet. Um die Anzahl der Anschlussplätze am zugehörigen Steuergerät zu begrenzen, werden von einigen Automobilherslellern Bussysteme gefordert. Aus Gründen der Vorschriften hinsichtlich elektromagnetischer Verträglichkeit (EMV) sind die Datenraten solcher Bussysteme begrenzt. Bei einem konventionellen Design führt dies auch zu einer Begrenzung der Datenrate für jeden einzelnen Sensor. Eine hohe Datenrate ist jedoch notwendig, um beispielsweise schnell genug auf Crashereignisse reagieren zu können.

### VORTEILE DER ERFINDUNG

Der erfindungsgemäße Sensor ermöglicht es, periphere Sensoren in einer Reihenschaltung an ein einzelnes Sensorinterface eines Steuergerätes anzuschließen und sie nach dem erfindungsgemäßen Verfahren zu betreiben.

Das hat den Vorteil, dass die volle Bandbreite des physikalischen Sensorinterfaces am Steuergerät genutzt werden kann und die Datenrate eines jeweiligen Sensors gegenüber dem Stand der Technik hierbei erhöht werden kann.

Die Grundidee der Erfindung wird im Folgenden erläutert.

Kern der Erfindung ist ein peripherer Sensor, der mit anderen gleich ausgebildeten Sensoren in einer Reihenschaltung angeordnet werden kann. Dieses wird auch mit dem Begriff "kaskadierbarer" Sensor bezeichnet. Hierbei wird jeweils ein Punkt-zu-Punkt-Interface mit demselben Hard- und Softwareprotokoll zwischen dem Steuergerät und dem ersten Sensor und zwischen den weiteren Sensoren gebildet.

Ein wesentlicher Vorteil der Erfindung ist, dass der jeweilige Sensor anhand von Prioritätsinformationen selbst entscheidet, welches Signal von ihm weitergeleitet wird, das Signal von dem vorausgehenden Sensor oder sein eigenes Signal.

Auf diese Weise ist es vorteilhaft möglich, dass hohe Datenraten der einzelnen Sensoren zum Einsatz kommen können. Die Prioritätsinformationen der jeweiligen Signale können zusätzlich durch ein weiteres Prioritätskriterium, wie beispielsweise die Signalhöhe, überlagert und somit bei Betrieb verändert werden.

Der erfindungsgemäße Sensor ist ausgebildet zur peripheren Anordnung in einer Reihenschaltung, insbesondere zur Anwendung in einem Kraftfahrzeug, und weist Folgendes auf:
ein Sensorelement zur Abtastung einer bestimmten Größe und Bildung eines der bestimmten Größe korrespondierenden Signals;
eine Auswerteeinheit zur Auswertung und Bearbeitung des Signals des Sensorelements, die mit dem Sensorelement über eine Sensorverbindung verbunden ist;
ein Empfangsinterface zum Anschluss an einen zweiten Sensor zum Empfang von von dem zweiten Sensor gesendeten Daten, welches mit der Auswerteeinheit über eine Eingangsverbindung verbunden ist; und
ein Sendeinterface zum Anschluss an einen weiteren Sensor oder an ein Sensorinterface eines Steuergerätes zum Senden von Daten an den weiteren Sensor oder an das Steuergerät, wobei das Sendeinterface über eine Ausgangsverbindung mit der Auswerteeinheit verbunden ist,
wobei Empfangs- und Sendeinterface für ein identisches Hard- und Softwareprotokoll ausgebildet sind.
Dadurch wird erreicht, dass eine vorteilhaft einfache Reihenschaltung von peripheren Sensoren sowie nachträglicher Veränderung und Variation dieser ermöglicht ist.

In einer bevorzugten Ausführungsform ist vorgesehen, dass die Auswerteeinheit eine Auswahleinrichtung zur Auswahl der vom Empfangsinterface empfangenen Daten oder/und der vom Sensorelement erhaltenen Signale zur Weiterleitung an das Sendeinterface aufweist. Dieses ist besonders vorteilhaft, da somit eine einfache Unterscheidung von Signalen getroffen werden kann.

Es ist besonders bevorzugt, dass die Auswahleinrichtung für eine Auswahlentscheidung aus Prioritätsinformationen der über das Empfangsinterface empfangenen Daten und vorgebbaren Daten zur Weiterleitung der über das Empfangsinterface empfangenen Daten oder/und der Daten des eigenen Sensorelements ausgebildet ist.

Dazu ist in weiterer Ausgestaltung vorgesehen, dass die Auswahleinrichtung eine Schalteinrichtung zur Verbindung der Eingangsverbindung oder der Sensorverbindung mit der Ausgangsverbindung und eine Steuereinheit zur Steuerung der Schalteinrichtung aufweist. So wird das Signal mit der höchsten Priorität sofort zur Weiterleitung mit dem Sendeinterface verbunden.

In einer weiteren Ausgestaltung weist die Auswahleinrichtung eine Bcarbeitungseinrichtung zur Datenreduktion für über das Empfangsinterface empfangene Daten und für die Signale des Sensorelements auf. Damit wird der Einsatzbereich auch für begrenzte Datenraten vorteilhaft erweitert.

Eine weitere Ausführungsform sieht vor, dass die Auswahleinrichtung eine Speichereinrichtung für die vorgebbaren Daten oder/und einen Steuereingang für die Auswahlentscheidung zur Betätigung der Schalteinrichtung aufweist. Dadurch sind die vorgebbaren Daten veränderbar beziehungsweise auch je nach Betriebsbedingung abrufbar, wobei dieses auch über einen Steuereingang möglich ist.

In einer weiteren Ausführungsform weist die Auswahleinrichtung eine weitere Speichereinrichtung zur Speicherung von gesammelten empfangenen Daten auf, wodurch eine Zwischenspeicherung von bestimmten Datenmengen möglich ist, die erst nach Weiterleitung der Daten mit höchster Priorität weitergeleitet werden.

Ein erfindungsgemäßes Verfahren zum Betreiben von in einer Reihenschaltung angeordneten Sensoren an einem Steuergerät, insbesondere in einem Kraftfahrzeug,, ist dadurch gekennzeichnet, dass in jedem Sensor der Reihenschaltung ein Auswerten von Daten eines Signals eines Sensorelements und Anfügen einer Prioritätsinformation an die Daten gemäß vorgebbaren Datenwerten erfolgt, dass in jedem Sensor innerhalb der Reihenschaltung mit Ausnahme des Sensors, dessen Empfangsinterface keinen Anschluss aufweist, Empfangen von Daten eines über ein Empfangsinterface angeschlossenen Sensors und Vergleichen der Prioritätsinformationen der empfangenen Daten und der Daten des Sensorelements untereinander oder mit vorgebbaren Datenwerten erfolgt, wobei ein Weiterleiten von Daten an ein Sendeinterface zu dem an das Sendeinterface angeschlossenen Sensor oder an ein Sensorinterface eines Steuergerätes in der Reihenfolge der Prioritäten ausgeführt wird, wobei alle Interfaces mit gleichem Hard- und Softwareprotokoll betrieben werden. Hiermit ist vorteilhaft sichergestellt, dass auch hohe Datenraten verwendet werden können, wobei immer die Daten mit der höchsten Priorität weitergeleitet werden.

In einer weiteren Ausgestaltung ist die Prioritätsinformation ein vorgebbarer Datenwert oder eine Signalhöhe. Eine Signalhöhe kann bei Betrieb die vorgegebene Prioritätsinformation nach aktueller Betriebsbedingung vorteilhaft anpassen beziehungsweise verändern, wodurch eine vorteilhafte Flexibilität erreicht wird.

In einer weiteren Ausführung ist der vorgebbare Datenwert über einen Steuereingang veränderbar, wodurch sich eine externe Beeinflussung einfach ausführen lässt.

Für hohe Datenraten ist es vorteilhaft, dass die Daten der Sensoren jeweils in einer Speichereinrichtung gesammelt und dann weitergeleitet werden.

Im Fall von begrenzten Datenraten werden die Daten der Sensoren jeweils einem Datenreduktionsalgorithmus unterzogen, wodurch eine vorteilhafte Komprimierung der Daten für eine schnelle Datenübertragung erfolgt.

Es ist vorteilhaft, dass in einer Ausführungsform die Weiterleitung der Daten und die Kommunikation der Sensoren untereinander und mit dem Steuergerät synchron oder teilasynchron ausgeführt wird, wobei im Fall der teilasynchronen Ausführung der letzte Sensor (5) in der Reihenschaltung den Takt bestimmt.

Ein erfindungsgemäße Vorrichtung mit einem Steuergerät und einer Reihenschaltung von Sensoren ist dadurch gekennzeichnet, dass ein erster Sensor mit einem Sendeinterface mit einem Sensorinterface eines Steuergerätes über eine erste Verbindung verbunden ist, wobei er mit einem Empfangsinterface mit dem Sendeinterface eines zweiten Sensors über eine zweite Verbindung verbunden ist, und dass weitere Sensoren untereinander über dritte bis vierte Verbindungen jeweils so in Reihe verbunden sind, dass das Empfangsinterface des jeweiligen vorangehenden Sensors mit dem Sendeinterface des jeweiligen nachgeschalteten Sensors verbunden ist. Auf diese Weise ist eine vorteilhaft einfache Vorrichtung einer Reihenschaltung von kaskadierbaren Sensoren an ein einzelnes Sensorinterface eines Steuergerätes ermöglicht.

Vorteilhafte Ausgestaltungen und Weiterbildungen der Erfindung sind den Unteransprüchen und der Beschreibung unter Bezugnahme auf die Zeichnungen entnehmbar.

### ZEICHNUNGEN

Die Erfindung wird nachfolgend anhand des in den Figuren der Zeichnung angegebenen Ausführungsbeispiels näher erläutert.

Es zeigt dabei:
- FIG. 1: ein Blockschaltbild einer Ausführungsform einer erfindungsgemäßen Vorrichtung mit erfindungsgemäßen Sensoren;
- FIG. 2: eine schematische Darstellung eines Aufbaus eines erfindungsgemäßen Sensors; und
- FIG. 3: einen Aufbau einer Auswahleinrichtung eines Sensors nach Fig. 2.

### BESCHREIBUNG DER AUSFÜHRUNGSBEISPIELE

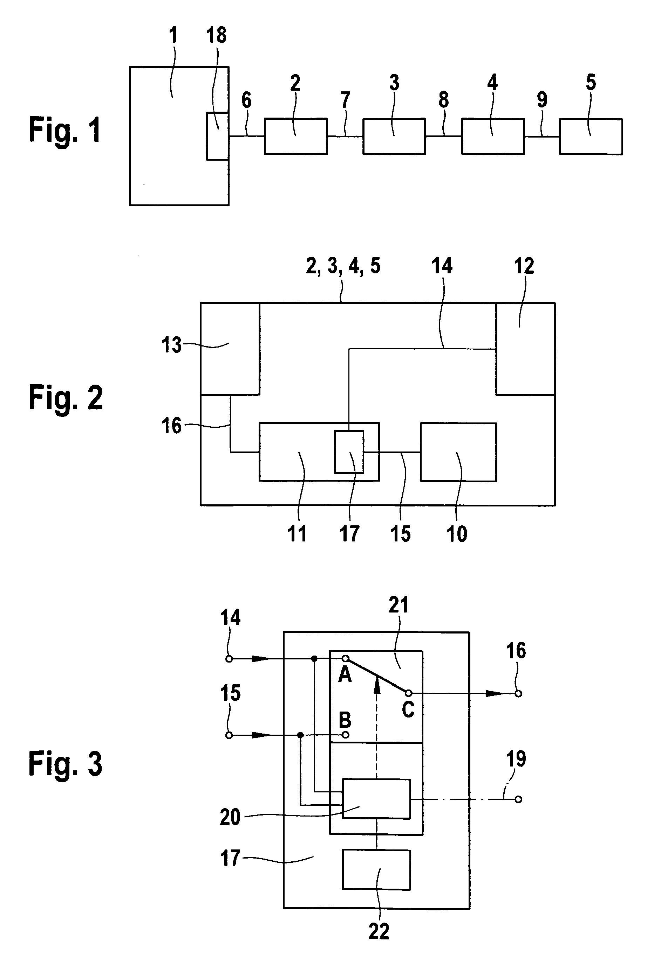

In Fig. 1 ist eine Ausführungsform einer erfindungsgemäßen Vorrichtung mit erfindungsgemäßen Sensoren 2 bis 5 in einem Blockschaltbild dargestellt. Es handelt sich dabei um periphere Sensoren 2 bis 5, welche außerhalb eines Steuergerätes 1 in einem nicht dargestellten Kraftfahrzeug installiert sind. Die Übertragung von Signalen erfolgt unidirektional, das heißt von einem vierten Sensor 5 über die vorausgehenden Sensoren 4, 3, 2 bis zum Steuergerät 1.

An das Steuergerät 1 ist zunächst an einem Sensorinterface 18 ein erster Sensor 2 über eine erste Verbindung 6 angeschlossen. In einer Reihenschaltung schließen sich weitere Sensoren 3, 4, 5 an: Ein zweiter Sensor 3 ist mit dem vorstehenden ersten Sensor 2 über eine zweite Verbindung 7 und mit einem nachfolgenden dritten Sensor 4 über eine dritte Verbindung 8 verbunden. In diesem Ausführungsbeispiel besteht die Reihenschaltung aus vier Sensoren 2 bis 5, wobei der vierte Sensor 5 über eine vierte Verbindung 9 an den vorhergehenden dritten Sensor 4 angeschlossen ist.

Diese Anordnung der Sensoren 2 bis 5, die auch als "kaskadierbar" bezeichnet werden kann, weist Verbindungen untereinander zwischen bestimmten Schnittstellen beziehungsweise Interfaces der Sensoren 2 bis 5 und dem Steuergerät 1 auf, welche jeweils Punkt-zu-Punkt-Interfaces bilden und alle mit dem gleichen Hard- und Softwareprotokoll betrieben werden. Die Sensoren 2 bis 5 sind untereinander mit internen Schnittstellen verbunden, welche mit Bezugnahme auf Fig. 2 beschrieben werden.

Fig. 2 zeigt eine schematische Darstellung eines Aufbaus eines solchen "kaskadierbaren" Sensors 2 bis 5. Der Sensor 2 bis 5 weist Folgendes auf: ein Sensorelement 10, eine Auswerteeinheit 11 mit einer Auswahleinrichtung 17, ein Empfangsinterface 12 und ein Sendeinterface 13.

Das Sensorelement 10 erfasst eine bestimmte Größe, wie beispielsweise Druck oder Beschleunigung, und setzt diese in ein elektrisches Sensorsignal um, welches an die Auswerteeinheit 11 über eine Sensorverbindung 15 geleitet wird. Die Auswerteeinheit 11, beispielsweise ein spezieller integrierter Schaltkreis, wertet das Signal des Sensorelements 10 aus und empfängt über eine Eingangsverbindung 14 von dem Empfangsinterface 12 Daten des daran angeschlossenen nachfolgenden Sensors 3 bis 5.

Die Auswerteeinheit 11 leitet entweder das vom Empfangsinterface 12 empfangene Signal oder das Sensorsignal des Sensorelements 10 nach einem bestimmten Auswahlkriterium über eine Ausgangsverbindung 16 an das Sendeinterface 13 weiter, an welches entweder ein vorausgehender Sensor 2 bis 4 oder das Sensorinterface 18 des Steuergerätes 1 angeschlossen ist.

In der Auswahleinrichtung 17 der Auswerteeinheit 11 wird ein Signal als ein mit höchster Priorität weiterzuleitendes Signal in diesem Beispiel mittels einer Prioritätsinformation ausgewählt. Die Auswerteeinheit 11 des nachfolgenden Sensors 3 bis 5 fügt den Daten des jeweiligen Sensorelements 10 eine Prioritätsinformation hinzu, welche als ein vorgegebener fester Wert, beispielsweise in einer Speichereinrichtung (siehe Fig. 3) vorliegt. Damit erkennt die vorausgehende Auswahleinrichtung 17 die Priorität der Weiterleitung. Sind die Daten des vierten Sensors 5 von höchster Priorität, beispielsweise weil dieser Sensor 5 einen Crash erkannt hat, so wird dieses Kriterium diesen Daten von der Auswerteeinheit 11 des vierten Sensors 5 hinzugefügt, und alle Auswahleinheiten 17 der in der Reihenschaltung angeordneten Sensoren 2 bis 4 werden diese Daten sofort zum Steuergerät 1 weiterleiten.

Das Prioritätskriterium kann in weiterer Ausgestaltung auch die Signalhöhe eines Sensorsignals sein. Werden im normalen Fahrbetrieb beispielsweise nur die Daten des zweiten Sensors 3 weitergeleitet und tritt plötzlich ein Crashereignis auf, welches der dritte Sensor 4 erkennt, so ist dessen Signalhöhe wesentlich größer als die des zweiten Sensors 3. Infolgedessen wird das nun im zweiten Sensor 3 ankommende Signal des dritten Sensors 4 auf Grund der Signalhöhe als höchste Priorität erkannt und sofort weitergeleitet.

In der Fig. 3 ist ein beispielhafter Aufbau einer Auswahleinrichtung 17 eines Sensors 2 bis 5 nach Fig. 2 dargestellt. Die Auswahleinrichtung 17 beinhaltet in diesem Ausführungsbeispiel eine Schalteinrichtung 21 mit Kontaktanschlüssen A, B und C, welche als ein elektrisches Schaltsymbol der Einfachheit halber dargestellt ist. Eine Betätigung dieser Schalteinrichtung erfolgt durch eine Steuereinheit 10, welches durch eine gestrichelte Linie verdeutlicht ist. Die Steuereinheit 10 ist jeweils mit der Eingangsverbindung 14 und der Sensorverbindung 15 verbunden, um die Prioritätsinformationen der auf diesen Leitungen vorhandenen Signale abzutasten. In einer mit der Steuereinheit 10 verbundenen Speichereinrichtung 22 sind vorgebbare Datenwerte gespeichert, die zur Auswahlentscheidung zwischen den Signalen auf den Verbindungen 14 und 15 dienen. Je nach Auswahlentscheidung verbindet die Schalteinrichtung 21 in Abhängigkeit von der Steuereinheit 20 den Kontaktanschluss A, der mit der Eingangsverbindung 14 verbunden ist, mit der am Kontaktanschluss C angeschlossenen Ausgangsverbindung 16, wenn das empfangen Signal von dem Empfangsinterface 12 die höchste Priorität aufweist, oder den Kontaktanschluss B mit dem Kontaktanschluss C, wenn das eigene Sensorsignal die höchste Priorität aufweist.

Die unidirektionale Übertragung in der Reihenschaltung nach Fig. 1 kann synchron oder teilasynchron erfolgen. Im asynchronen Fall bestimmt der letzte Sensor, hier der vierte Sensor 5, in der Reihenschaltung den Takt. Der vorausgehende dritte Sensor 4 wartet ab, bis ihm Daten vom vierten Sensor 5 geliefert werden. Dann sendet er diese Daten anschließend mit seinen aktuellen Daten über die weiteren Sensoren 3 und 2 an das Steuergerät 1.

Die Erfindung ist nicht auf die oben beschriebenen Ausführungsbeispiele beschränkt, sondern auf vielfältige Art und Weise modifizierbar.

So ist es beispielsweise denkbar, dass bei einer begrenzten Datenrate Datenreduktionsalgorithmen, beispielsweise in der jeweiligen Auswerteeinheit 11 eines Sensors 2 bis 5, verwendet werden.

Weiterhin ist es auch denkbar, dass die Auswahleinrichtung 17 einen Steuereingang 19 an ihrer Steuereinheit 20 aufweist, über den externe Steuersignale zur Prioritätsvorgabe oder -änderung bei Betrieb je nach Betriebsbedingungen eingegeben werden können.

Sensor, ausgebildet zur Anordnung in einer Reihenschaltung, insbesondere zur Anwendung in einem Kraftfahrzeug, ein Verfahren zum Betreiben solcher Sensoren und eine Vorrichtung dazu

### BEZUGSZEICHENLISTE

| | |
|---|---|
| 1 | Steuergerät |
| 2 | Erster Sensor |
| 3 | Zweiter Sensor |
| 4 | Dritter Sensor |
| 5 | Vierter Sensor |
| 6 | Erste Verbindung |
| 7 | Zweite Verbindung |
| 8 | Dritte Verbindung |
| 9 | Vierte Verbindung |
| 10 | Sensorelement |
| 11 | Auswerteeinheit |
| 12 | Empfangsinterface |
| 13 | Sendeinterface |
| 14 | Dateneingang |
| 15 | Sensorverbindung |
| 16 | Datenausgang |
| 17 | Entscheidungseinrichtung |
| 18 | Sensorinterface |
| 19 | Steuereingang |
| 20 | Steuereinheit |
| 21 | Schalteinrichtung |
| 22 | Speichereinrichtung |
| | |
| A, B, C | Kontaktanschlüsse |

## Patentansprüche

1. Sensor (2, 3, 4, 5), ausgebildet zur peripheren Anordnung in einer Reihenschaltung, insbesondere zur Anwendung in einem Kraftfahrzeug, der Folgendes aufweist:
- ein Sensorelement (10) zur Abtastung einer bestimmten Größe und Bildung eines der bestimmten Größe korrespondierenden Signals;
- eine Auswerteeinheit (11) zur Auswertung und Bearbeitung des Signals des Sensorelements (10), die mit dem Sensorelement (10) über eine Sensorverbindung (15) verbunden ist;
- ein Empfangsinterface (12) zum Anschluss an einen zweiten Sensor (3) zum Empfang von von dem zweiten Sensor (3) gesendeten Daten, welches mit der Auswerteeinheit (11) über eine Eingangsverbindung (14) verbunden ist; und
- ein Sendeinterface (13) zum Anschluss an einen weiteren Sensor (3, 4, 5) oder an ein Sensorinterface (17) eines Steuergerätes (1) zum Senden von Daten an den weiteren Sensor (3, 4, 5) oder an das Steuergerät (1), wobei das Sendeinterface (13) über eine Ausgangsverbindung (16) mit der Auswerteeinheit (11) verbunden ist,
wobei Empfangs- und Sendeinterface (12, 13) für ein identisches Hard- und Softwareprotokoll ausgebildet sind.

2. Sensor nach Anspruch 1,
**dadurch gekennzeichnet,**
**dass** die Auswerteeinheit (11) eine Auswahleinrichtung (17) zur Auswahl der vom Empfangsinterface (12) empfangenen Daten oder/und der vom Sensorelement (10) erhaltenen Signale zur Weiterleitung an das Sendeinterface (13) aufweist.

3. Sensor nach Anspruch 2,
**dadurch gekennzeichnet,**
**dass** die Auswahleinrichtung (17) für eine Auswahlentscheidung aus Prioritätsinformationen der über das Empfangsinteiface (12) empfangenen Daten und vorgebbaren Daten zur Weiterleitung der über das Empfangsinterface (12) empfangenen Daten oder/und der Daten des eigenen Sensorelements (10) ausgebildet ist.

4. Sensor nach einem der Ansprüche 2 bis 3,
**dadurch gekennzeichnet,**
**dass** die Auswahleinrichtung (17) eine Schalteinrichtung (21) zur Verbindung der Eingangsverbindung (14) oder der Sensorverbindung (15) mit der Ausgangsverbindung (16) und eine Steuereinheit (20) zur Steuerung der Schalteinrichtung (21) aufweist.

5. Sensor nach einem der Ansprüche 2 bis 4,
**dadurch gekennzeichnet,**
**dass** die Auswahleinrichtung (17) eine Bearbeitungseinrichtung zur Datenreduktion für über das Empfangsinterface (12) empfangene Daten und für die Signale des Sensorelements (10) aufweist.

6. Sensor nach einem der Ansprüche 2 bis 5,
**dadurch gekennzeichnet,**
**dass** die Auswahleinrichtung (17) eine Speichereinrichtung (22) für die vorgebbaren Daten oder/und einen Steuereingang (19) für die Auswahlentscheidung zur Betätigung der Schalteinrichtung (21) aufweist.

7. Sensor nach einem der Ansprüche 2 bis 6,
**dadurch gekennzeichnet,**
**dass** die Auswahleinrichtung (17) eine weitere Speichereinrichtung zur Speicherung von gesammelten empfangenen Daten aufweist.

8. Verfahren zum Betreiben von in einer Reihenschaltung angeordneten Sensoren (2, 3, 4, 5) nach einem der Ansprüche 1 bis 7 an einem Steuergerät, insbesondere in einem Kraftfahrzeug"
**dadurch gekennzeichnet,**
**dass** in jedem Sensor (2, 3, 4, 5) der Reihenschaltung ein Auswerten von Daten eines Signals eines Sensorelements (10) und Anfügen einer Prioritätsinformation an die Daten gemäß vorgebbaren Datenwerten erfolgt, dass in jedem Sensor (2, 3, 4) innerhalb der Reihenschaltung mit Ausnahme des Sensors (5), dessen Empfangsinterface (12) keinen Anschluss aufweist, Empfangen von Daten eines über ein Empfangsinterface (12) angeschlossenen Sensors (3, 4, 5) und Vergleichen der Prioritätsinformationen der empfangenen Daten und der Daten des Sensorelements (10) untereinander oder mit vorgebbaren Datenwerten erfolgt, wobei ein Weiterleiten von Daten an ein Sendeinterface (13) zu dem an das Sendeinterface (13) angeschlossenen Sensor (2, 3, 4) oder an ein Sensorinterface (18) eines Steuergerätes (1) in der Reihenfolge der Prioritäten ausgeführt wird, wobei alle Interfaces (12, 13, 18) mit gleichem Hard- und Softwareprotokoll betrieben werden.

9. Verfahren nach Anspruch 8,
**dadurch gekennzeichnet,**
**dass** die Prioritätsinformation ein vorgebbarer Datenwert oder eine Signalhöhe ist.

10. Verfahren nach Anspruch 9,
**dadurch gekennzeichnet,**
**dass** der vorgebbare Datenwert über einen Steuereingang (19) veränderbar ist.

11. Verfahren nach einem der Ansprüche 8 bis 10,
**dadurch gekennzeichnet,**
**dass** die Daten der Sensoren (2, 3, 4, 5) jeweils in einer Speichereinrichtung gesammelt und dann weitergeleitet werden.

12. Verfahren nach einem der Ansprüche 8 bis 10,
**dadurch gekennzeichnet,**
**dass** die Daten der Sensoren (2, 3, 4, 5) jeweils einem Datenreduktionsalgorithmus unterzogen werden.

13. Verfahren nach einem der Ansprüche 8 bis 12,
**dadurch gekennzeichnet,**
**dass** die Weiterleitung der Daten und die Kommunikation der Sensoren (2, 3, 4, 5) untereinander und mit dem Steuergerät synchron oder teilasynchron ausgeführt wird, wobei im Fall der teilasynchronen Ausführung der letzte Sensor (5) in der Reihenschaltung den Takt bestimmt.

14. Vorrichtung mit einem Steuergerät (1) und einer Reihenschaltung von Sensoren (2, 3, 4, 5) nach einem der Ansprüche 1 bis 7,
**dadurch gekennzeichnet,**
**dass** ein erster Sensor (2) mit einem Sendeinterface (13) mit einem Sensorinterface (17) eines Steuergerätes (1) über eine erste Verbindung (6) verbunden ist, wobei er mit einem Empfangsinterface (12) mit dem Sendeinterface (13) eines zweiten Sensors (3) über eine zweite Verbindung (7) verbunden ist, und dass weitere Sensoren (4, 5) untereinander über dritte bis vierte Verbindungen (8, 9) jeweils so in Reihe verbunden sind, dass das Empfangsinterface (12) des jeweiligen vorangehenden Sensors (2, 3, 4) mit dem Sendeinterface (13) des jeweiligen nachgeschalteten Sensors (3, 4, 5) verbunden ist.

## Claims

1. Sensor (2, 3, 4, 5) for peripheral arrangement in a series circuit, in particular for use in a motor vehicle, which sensor has the following:
- a sensor element (10) for sensing a particular variable and forming a signal corresponding to the particular variable;
- an evaluation unit (11) which is intended to evaluate and process the signal from the sensor element (10) and is connected to the sensor element (10) via a sensor connection (15);
- a receiving interface (12) which is intended to be connected to a second sensor (3) for the purpose of receiving data transmitted by the second sensor (3) and is connected to the evaluation unit (11) via an input connection (14); and
- a transmitting interface (13) for connection to a further sensor (3, 4, 5) or to a sensor interface (18) of a control device (1) for the purpose of transmitting data to the further sensor (3, 4, 5) or to the control device (1), the transmitting interface (13) being connected to the evaluation unit (11) via an output connection (16),
the receiving and transmitting interfaces (12, 13) being designed for an identical hardware and software protocol.

2. Sensor according to Claim 1,
**characterized in that**
the evaluation unit (11) has a selection device (17) for selecting the data received by the receiving interface (12) or/and the signals received from the sensor element (10) for forwarding to the transmitting interface (13).

3. Sensor according to Claim 2,
**characterized in that**
the selection device (17) is designed to make a selection decision from priority information of the data received via the receiving interface (12) and predefinable data for the purpose of forwarding the data received via the receiving interface (12) or/and the data from the particular sensor element (10).

4. Sensor according to one of Claims 2 to 3,
**characterized in that**
the selection device (17) has a switching device (21) for connecting the input connection (14) or the sensor connection (15) to the output connection (16) and a control unit (20) for controlling the switching device (21).

5. Sensor according to one of Claims 2 to 4,
**characterized in that**
the selection device (17) has a data reduction processing device for data received via the receiving interface (12) and for the signals from the sensor element (10).

6. Sensor according to one of Claims 2 to 5,
**characterized in that**
the selection device (17) has a memory device (22) for the predefinable data or/and a control input (19) for the selection decision for the purpose of actuating the switching device (21).

7. Sensor according to one of Claims 2 to 6,
**characterized in that**
the selection device (17) has a further memory device for storing collected received data.

8. Method for operating sensors (2, 3, 4, 5) arranged in a series circuit according to one of Claims 1 to 7 in a control device, in particular in a motor vehicle,
**characterized in that**
data in a signal from a sensor element (10) are evaluated and an item of priority information is attached to the data according to predefinable data values in each sensor (2, 3, 4, 5) in the series circuit, **in that** data from a sensor (3, 4, 5) connected via a receiving interface (12) are received in each sensor (2, 3, 4) within the series circuit, with the exception of the sensor (5) whose receiving interface (12) does not have a connection, and the priority information of the received data is compared with the data from the sensor element (10) or with predefinable data values, data being forwarded to a transmitting interface (13) to the sensor (2, 3, 4) connected to the transmitting interface (13) or to a sensor interface (18) of a control device (1) in the order of the priorities, all interfaces (12, 13, 18) being operated with the same hardware and software protocol.

9. Method according to Claim 8,
**characterized in that**
the priority information is a predefinable data value or a signal level.

10. Method according to Claim 9,
**characterized in that**
the predefinable data value can be changed via a control input (19).

11. Method according to one of Claims 8 to 10,
**characterized in that**
the data from the sensors (2, 3, 4, 5) are each collected in a memory device and are then forwarded.

12. Method according to one of Claims 8 to 10, **characterized in that**
the data from the sensors (2, 3, 4, 5) are each subjected to a data reduction algorithm.

13. Method according to one of Claims 8 to 12,
**characterized in that**
the data are forwarded and the sensors (2, 3, 4, 5) communicate with one another and with the control device in a synchronous or partially asynchronous manner, the last sensor (5) in the series circuit determining the clock in the case of partially asynchronous operation.

14. Apparatus having a control device (1) and a series circuit of sensors (2, 3, 4, 5) according to one of Claims 1 to 7,
**characterized in that**
a transmitting interface (13) of a first sensor (2) is connected to a sensor interface (18) of a control device (1) via a first connection (6), a receiving interface (12) of the first sensor being connected to the transmitting interface (13) of a second sensor (3) via a second connection (7), and **in that** further sensors (4, 5) are each connected in series with one another via third to fourth connections (8, 9) in such a manner that the receiving interface (12) of the respective preceding sensor (2, 3, 4) is connected to the transmitting interface (13) of the respective downstream sensor (3, 4, 5).

## Revendications

1. Détecteur (2, 3, 4, 5) configuré pour être disposé à la périphérie d'un circuit série et en particulier pour être utilisé dans un véhicule automobile, le détecteur présentant les caractéristiques suivantes:
- un élément de détection (10) qui détecte une grandeur définie et qui forme un signal qui correspond à la grandeur définie,
- une unité d'évaluation (11) qui évalue et traite le signal de l'élément de détection (10) et qui est reliée à l'élément de détection (10) par une liaison de détecteur (15),
- une interface de réception (12) destinée à être raccordée à un deuxième détecteur (3) pour recevoir des données envoyées par le deuxième détecteur (3) et reliée à l'unité d'évaluation (11) par une liaison d'entrée (14) et
- une interface d'émission (13) destinée à être raccordée à un autre détecteur (3, 4, 5) ou à une interface de détecteur (18) d'un appareil de commande (1) pour envoyer des données à l'autre détecteur (3, 4, 5) ou à l'appareil de commande (1), l'interface d'émission (13) étant reliée à l'unité d'évaluation (11) par une liaison de sortie (16),
l'interface de réception et l'interface d'émission (12, 13) étant configurées pour un même protocole matériel et un même protocole logiciel.

2. Détecteur selon la revendication 1, **caractérisé en ce que** l'unité d'évaluation (11) présente un dispositif de sélection (17) qui sélectionne les données reçues par l'interface de réception (12) et/ou les signaux reçus de l'élément de détection (10) pour les relayer à l'interface d'émission (13).

3. Détecteur selon la revendication 2, **caractérisé en ce que** le dispositif de sélection (17) est configuré pour décider de la sélection d'informations prioritaires parmi les données reçues par l'intermédiaire de l'interface de réception (12) et des données prédéterminées de transfert des données reçues par l'intermédiaire de l'interface de réception (12) et/ou des données de l'élément de détection propre (10).

4. Détecteur selon l'une des revendications 2 et 3, **caractérisé en ce que** le dispositif de sélection (17) présente un dispositif de commutation (21) qui relie la liaison d'entrée (14) ou la liaison de détecteur (15) à la liaison de sortie (16) et une unité de commande (20) qui commande le dispositif de commutation (21).

5. Détecteur selon l'une des revendications 2 à 4, **caractérisé en ce que** le dispositif de sélection (17) présente un dispositif de traitement qui réduit les données reçues par l'intermédiaire de l'interface de réception (12) et les signaux de l'élément de détection (10).

6. Détecteur selon l'une des revendications 2 à 5, **caractérisé en ce que** le dispositif de sélection (17) présente un dispositif de mémoire (22) pour les données prédéterminées et/ou une entrée de commande (19) pour la décision de sélection en vue d'actionner le dispositif de commutation (21).

7. Détecteur selon l'une des revendications 2 à 6, **caractérisé en ce que** le dispositif de sélection (17) présente un autre dispositif de mémoire qui conserve en mémoire des données reçues et rassemblées.

8. Procédé de gestion de détecteurs (2, 3, 4, 5) disposés en série selon l'une des revendications 1 à 7 sur un appareil de commande, en particulier dans un véhicule automobile,
**caractérisé en ce que**
dans chaque détecteur (2, 3, 4, 5) du circuit en série s'effectue une évaluation des données d'un signal d'un élément de détection (10) et l'adjonction d'une information de priorité aux données selon des valeurs prédéterminées des données,
**en ce que** dans chaque détecteur (2, 3, 4) situé dans le circuit série à l'exception du détecteur (5) dont l'interface de réception (12) ne présente pas de borne de raccordement s'effectuent la réception des données d'un détecteur (3, 4, 5) raccordé par l'intermédiaire d'une interface de réception (12) et la comparaison des informations de priorité des données reçues et des données de l'élément de détection (10) entre elles ou avec des valeurs prédéterminées des données,
**en ce que** le transfert des données à une interface d'émission (13) vers le détecteur (2, 3, 4) raccordé à l'interface d'émission (13) ou à une interface de détecteur (18) d'un appareil de commande (1) étant exécuté dans l'ordre des priorités et
**en ce que** toutes les interfaces (12, 13, 18) sont gérées à l'aide du même protocole matériel et du même protocole logiciel.

9. Procédé selon la revendication 8, **caractérisé en ce que** l'information de priorité est une valeur prédéterminée de donnée ou une hauteur prédéterminée d'un signal.

10. Procédé selon la revendication 9, **caractérisé en ce que** la valeur prédéterminée de donnée peut être modifiée par une entrée de commande (19).

11. Procédé selon l'une des revendications 8 à 10, **caractérisé en ce que** les données des détecteurs (2, 3, 4, 5) sont toutes rassemblées dans un dispositif de mémoire avant d'être transférées.

12. Procédé selon l'une des revendications 8 à 10, **caractérisé en ce que** les données des détecteurs (2, 3, 4, 5) subissent toutes un algorithme de réduction des données.

13. Procédé selon l'une des revendications 8 à 12, **caractérisé en ce que** le transfert des données et la communication des détecteurs (2, 3, 4, 5) entre eux et avec l'appareil de commande sout exécutés de manière synchronisée ou partiellement asynchrone, le dernier détecteur (5) du circuit série définissant la cadence en cas d'exécution partiellement asynchrone.

14. Dispositif doté d'un appareil de commande (1) et d'un circuit série de détecteurs (2, 3, 4, 5) selon l'une des revendications 1 à 7, **caractérisé en ce qu'**un premier détecteur (2) est relié par une interface d'émission (13) à une interface de détecteur (18) d'un appareil de commande (1) par l'intermédiaire d'une première liaison (6), ce premier détecteur étant relié par une interface de réception (12) à l'interface d'émission (13) d'un deuxième détecteur (3) par l'intermédiaire de la deuxième liaison (7) et **en ce que** d'autres détecteurs (4, 5) sont reliés en série par une troisième et une quatrième liaison (8, 9) de telle sorte que l'interface de réception (12) de chaque détecteur (2, 3, 4) précédent soit reliée à l'interface d'émission (13) de chaque détecteur (3, 4, 5) suivant.
